# EUROPEAN PATENT SPECIFICATION

(11) **EP 3 343 862 B1**
(45) Date of publication and mention of the grant of the patent: **29.05.2019**
(21) Application number: 17161220.3
(22) Date of filing: 15.03.2017
(51) Int. Cl.: H04W 12/06, H04L 29/06, H04W 84/12, H04W 48/08, H04W 64/00

(54) **METHOD AND SYSTEM FOR PROVIDING A COMMUNICATION DEVICE ACCESS TO A WIRELESS LOCAL AREA NETWORK**
METHODE UND SYSTEM ZUR BEREITSTELLUNG DES ZUGANGS ZU EINEM DRAHTLOSEN LOKALEN BEREICH NETZWERK FÜR EIN KOMMUNIKATIONSGERÄT
PROCÉDÉ ET SYSTÈME POUR FOURNIR UN DISPOSITIF DE COMMUNICATION ACCÈS À UN RÉSEAU DE ZONE LOCALE SANS FIL

(30) Priority: 30.12.2016 IN 201641045097
(43) Date of publication of application: 04.07.2018
(73) Proprietor: Wipro Limited, 560 035 Karnataka (IN)
(72) Inventor: JEYACHANDRASEKAR, Naveen Kumar, 560100 Bangalore (IN)
(74) Representative: Finnegan Europe LLP

(56) References cited:
- CN-A- 104 994 118
- US-B2- 8 984 606

## Description

### Technical Field

The present invention relates to wireless local area networks and, in particular, to methods and systems for providing a communication device access to wireless local area network.

### Background

Wireless local area networks (WLANs) have greatly improved the way users access information on the internet. Typically, in a WLAN, users connect their client device (or WLAN Station (STA)) to an access point to access Intranet or Internet services with the access point acting as the gateway to the WLAN. A network administrator provides the wireless Network Access Information (NAI), such as a Service Set Identifier (SSID), password, security type, etc. to authorized users to allow connection of user's client device to the access point. A supplicant residing at the user's client device is responsible for establishing, maintaining, and managing the wireless connection with the access point. For establishing the wireless connection, the supplicant uses the NAI to connect to the access point. The NAI is typically shared with the user over a secure channel.

Even though the NAI is shared with the user over a secure channel, there are multiple drawbacks with the conventional system of sharing the NAI as well as establishing the wireless connection. For example, one of the major drawbacks is that the authorized user is not prevented from connecting unauthorized devices to the WLAN. Thus, the authorized user may exploit the wireless connection by connecting additional devices that are not authorized for connection in addition to the devices that are authorized. Another drawback with the conventional systems is that they cannot differentiate between an authorized user and an unauthorized user when the NAI or the authorized device is stolen. This leads to compromise of the security of the wireless local area network that can be exploited by malicious users.

Even in those circumstances where the NAI is provided to the user after verifying the identity, the ability to control the duration for which the user has access to the WLAN is limited. For example, if an authorized user needs to be stopped from accessing the WLAN, possible options available are to change the configuration of the WLAN or to add the MAC address of the user's device to the Access Control List (ACL) associated with the WLAN. However, such solutions are not practical for large scale network deployments and are difficult to manage efficiently.

Yet another drawback associated with the conventional process is leakage of private information associated with the user during active scanning by a user's client device for identifying and connecting with saved WLANs. As the user's client device is not aware of where a particular WLAN exists, it keeps scanning for saved network SSIDs periodically irrespective of whether the present location is relevant or not, thereby leading to poor power optimization and possible leakage of user's private information.

Thus, there is a need for an efficient method and system for providing a communication device access to a WLAN, which is secure, easy to manage, and scalable for a large number of client devices.

CN104994118 relates to a WiFi authentication system and method based on a dynamic password

US8984606 relates to a method of managing access to a network includes receiving a network access request including one or more credentials via an edge device.

### SUMMARY

In one embodiment, a method for providing a communication device access to a wireless local area network is disclosed. The method includes receiving, by a communication device, an Encrypted Network Access Information (ENAI) file from a network administration device, wherein the ENAI file comprises the network access information for the wireless local area network and user authentication requirement criteria; decrypting, by the communication device, the ENAI file to retrieve the network access information and the user authentication requirement criteria; receiving, by the communication device, a user authentication input to satisfy the user authentication requirement criteria; and accessing, by the communication device, the wireless local area network using the network access information, when the user authentication input satisfies the user authentication requirement criteria.

In another embodiment a system providing a communication device access to a wireless local area network is disclosed. The system includes: a network administration device; a user identification input device; and a supplicant management module, wherein the supplicant management module is operatively coupled with the network administration device and the user identification input device. The supplicant management module is configured to: receive an ENAI file from the network administration device, wherein the ENAI file comprises the network access information for the wireless local area network and user authentication requirement criteria; decrypt the ENAI file to retrieve the network access information and the user authentication requirement criteria; receive a user authentication input to satisfy the user authentication requirement criteria from the user identification input device; and access the wireless local area network using the network access information, when the user authentication input satisfies the user authentication requirement criteria.

The network administration device may be further configured to create the ENAI file to include the network access information, a user authentication required flag, and the user authentication requirement criteria.

The supplicant management module may be further configured to deny the communication device access to the wireless local area network, when the user authentication input fails to satisfy the user authentication requirement criteria.

The network administration device may be further configured to specify a mode of the user authentication input, the mode comprising at least one of a fingerprint scan, iris scan, facial recognition, numeric password, gesture, or swipe.

The network administration device may be further configured to associate access duration criteria for the user of the communication device in the ENAI file. The supplicant management module may be further configured to grant the communication device access to the wireless local area network when the access duration criteria are satisfied. The supplicant management module may be further configured to deny the communication device access to the wireless local area network, when the access duration criteria are not satisfied.

The network administration device may be further configured to associate a save location flag to location of the wireless local area network. The supplicant management module may be further configured to save a current location of the communication device as a network access location in response to detecting the save location flag in the ENAI. The supplicant management module may be further configured to save the current location of the communication device as the network access location, when the communication device is granted accesses to the wireless local area network first time after receiving the ENAI. The supplicant management module may be further configured to initiate a scan for the wireless local area network, when the communicating device is within a predefined distance from already saved network access location. The supplicant management module may be further configured to avoid a scan for the wireless local area network, when the communication device is not within a predefined distance from already saved network access location.

The communication device may be provided independently of the network administration device. Thus, a further aspect of the disclosure provides a communication device as disclosed herein. Another aspect of the disclosure provides a method performed at a communication device for providing the communication device access to a wireless local area network. A further aspect of the disclosure provides a network administration device as disclosed herein. Another aspect of the disclosure provides a method performed at a network administration device for providing a communication device access to a wireless local area network.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a system diagram of a wireless local area network (that is exemplary) in which embodiments of the present inventive concepts may be employed.
**FIG. 2** illustrates a flowchart of a method for providing a communication device access to Wireless Local Area Network (WLAN), in accordance with an embodiment.
**FIG. 3** illustrates call flows for storing the network access information to memory of communication device and connecting to WLAN, in accordance with an embodiment.
**FIG. 4** illustrates a flowchart of a method for creating the ENAI file, in accordance with an embodiment.
**FIG. 5a** is a block diagram showing contents of a default ENAI file, in accordance with an embodiment.
**FIG. 5b** is a block diagram showing contents of the ENAI file having user authentication required flag, and user authentication requirement criteria, in accordance with an embodiment.
**FIG. 6** illustrates a flowchart of a method for providing communication device access to WLAN based on user authentication requirement criteria.
**FIG. 7** illustrates call flows for saving the response to user authentication requirement criteria, mapping the response to the network access information in the ENAI file and loading the network access information to the memory present in the communication device, in accordance with an embodiment.
**FIG. 8** illustrates call flows for stopping connection attempts after retrying for a specified number of times, in accordance with an embodiment.
**FIG. 9** illustrates a flowchart of a method for providing a communication device access to WLAN 100 based on access duration criteria, in accordance with an embodiment.
**FIG. 10** is a block diagram showing contents of ENAI file having access duration criteria, in accordance with an embodiment.
**FIG. 11** illustrates call flows for disconnecting from WLAN and removing the saved network access information when the access duration criteria is not met, in accordance with an embodiment.
**FIG. 12** illustrates a flowchart of a method for providing a communication device access to WLAN based on location criteria, in accordance with an embodiment.
**FIG. 13** is a block diagram showing contents of an ENAI file having a save location flag, in accordance with an embodiment.
**FIG. 14** illustrates call flows for saving location data for a WLAN network, in accordance with an embodiment.
**FIG. 15** illustrates call flows for scanning for a particular WLAN network, in accordance with an embodiment.
**FIG. 16** illustrates call flows to avoid scanning for WLAN network, in accordance with an embodiment.
**FIG. 17** illustrates a flowchart of a method for checking if any new ENAI file is available and adding the network access information to memory after verification, in accordance with an embodiment.
**FIG. 18** illustrates a flowchart of a method for scanning for saved networks, in accordance with an embodiment.
**FIG. 19** illustrates a system for providing a communication device access to WLAN, in accordance with an embodiment.
**FIG. 20** illustrates a block diagram of an exemplary computer system for implementing various embodiments.

### DETAILED DESCRIPTION OF THE DRAWINGS

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Various embodiments of the invention provide methods, systems, and computer program products for providing a communication device access to a wireless local area network. The method includes receiving by the communication device an Encrypted Network Access Information (ENAI) file from a network administration device, wherein the ENAI file comprises the network access information for the wireless local area network and user authentication requirement criteria. In response to receiving the ENAI file, the communication device decrypts the ENAI file to retrieve the network access information and the user authentication requirement criteria. A user authentication input to satisfy the user authentication requirement criteria is received by the communication device. Thereafter, the communication device accesses the wireless local area network using the network access information, when the user authentication input satisfies the user authentication requirement criteria.

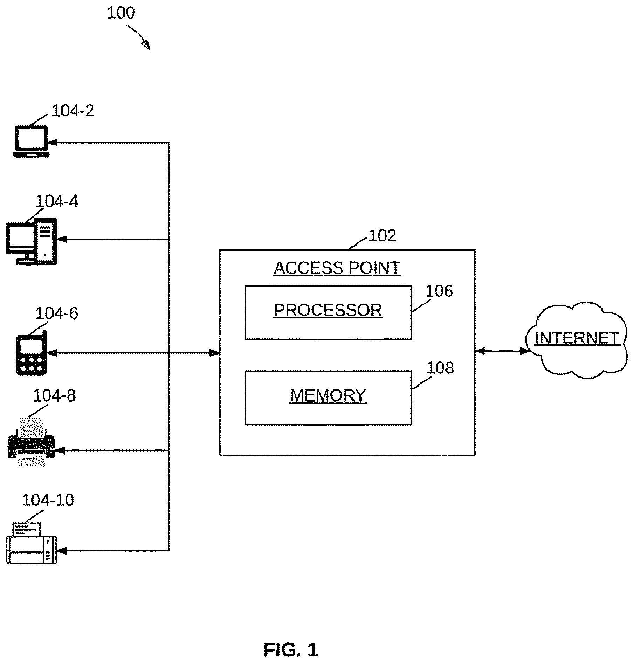

FIG. 1 is a system diagram of a Wireless Local Area Network (WLAN) 100 in which embodiments of the present inventive concepts may be employed. WLAN 100 includes an access point 102 and a plurality of client devices 104-n. Access point 102 acts as the gateway between client devices 104-n and the internet or intranet. A client device is any device which is able to use the communication protocols of WLAN 100 and connect to the internet or intranet. For example, a client device may be a device, such as, a mobile phone, a smart phone, a desktop or laptop computer, a fax machine, a printer, a sensor, a user wearable device, and a tablet. Access point 102 may be connected to a wired device, or to another (wired or wireless) network, in which case access point 102 facilitates communication between plurality of client devices 104-n in WLAN 100 and the wired device or another network

Typically, access point 102 includes a processor 106 and a memory 108. Memory 108 is configured to store a list of identifiers associated with plurality of client devices 104-n. The identifiers may correspond to one or more of a MAC address of plurality of client devices 104-n, a Service Set Identifier (SSID), a user password, and a security type associated with WLAN 100. Memory 108 stores a set of machine readable instructions executable by processor 106. The machine readable instructions when executed by processor 106 generate a beacon as well as process association requests from client devices.

Each of plurality of client devices 104-n includes a processor and a memory (not shown in FIG. 1), wherein the memory is configured to store machine readable instructions which are executable by the processor. Each client device will scan for beacons sent by access point 102 and upon receiving a beacon, the client device checks if its identifier matches the identifier stored in memory 108. If it matches, then the client device sends an association request to access point 102. After the association request is processed, the client device connects to internet or intranet in WLAN 100.

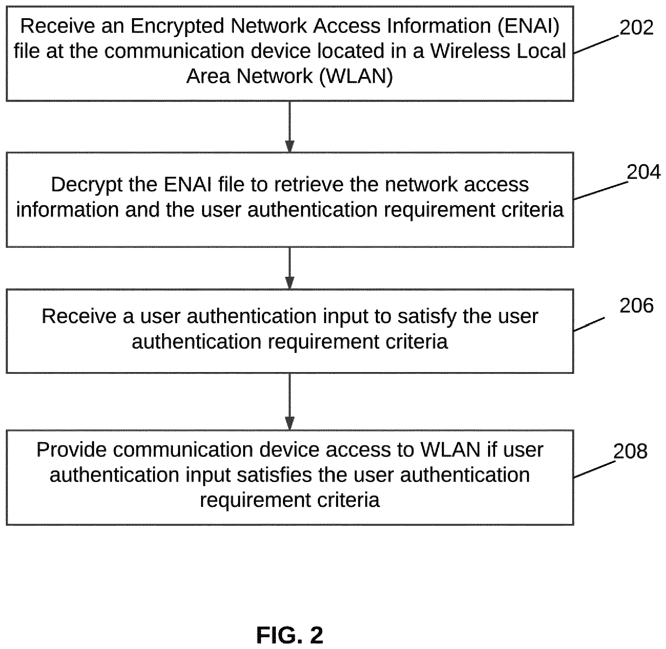

FIG. 2 illustrates a flowchart of a method for providing a communication device access to WLAN 100, in accordance with an embodiment. As has already been explained in conjunction with FIG. 1, an access point is configured to allow plurality of communication devices (or client devices) to connect to internet or intranet in WLAN 100. In order to provide a communication device access to WLAN 100, initially, at step 202, an Encrypted Network Access Information (ENAI) file is received by the communication device. The ENAI file is sent from a network administrator device to the communication device. The network administrator device is configured to establish a secure communication channel between the communication device and itself. In an embodiment, the network administrator device may correspond to the access point present in WLAN 100. Alternatively, in another embodiment, the network administrator device may be any other device that has been configured to allow the communication device to access WLAN 100.

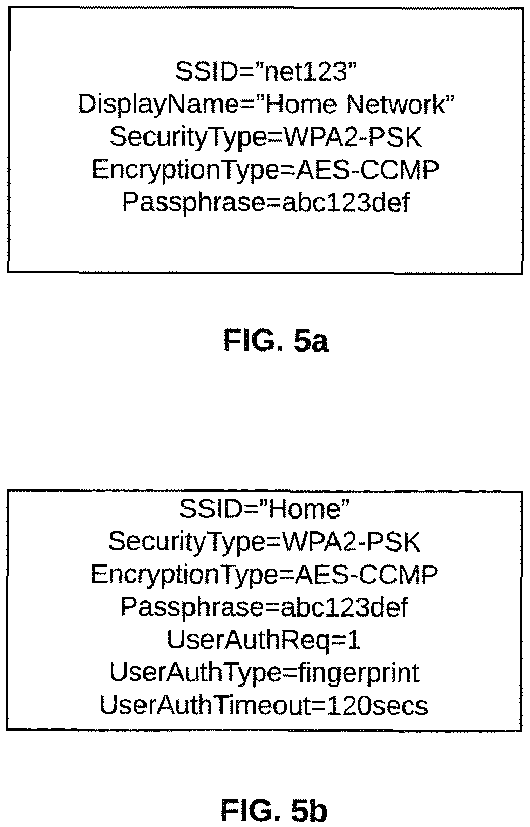

Before transferring the ENAI file to the communication device, the network administrator device obtains information about the user associated with the communication device and details of the communication device to verify and confirm that the user and his/her communication device are authorized to access WLAN 100. Once the network administrator device verifies and confirms that the user and his/her communication device is authorized, the Network Access Information (NAI) is shared with the communication device in an encrypted manner (i.e., ENAI file). The details and composition of the ENAI file will be further explained in detail in conjunction with FIG. 5a.

After receiving the ENAI file, the communication device invokes a supplicant residing in the communication device. The supplicant is essentially a program that facilitates connection of the communication device to WLAN 100 and thus is responsible for establishing, maintaining and managing connection with access point located in WLAN 100. Thus, at step 204, the supplicant residing in the communication device decrypts the ENAI file to retrieve the network access information and the user authentication requirement criteria. The network access information includes information such as SSID, login credentials such as password, and security keys.

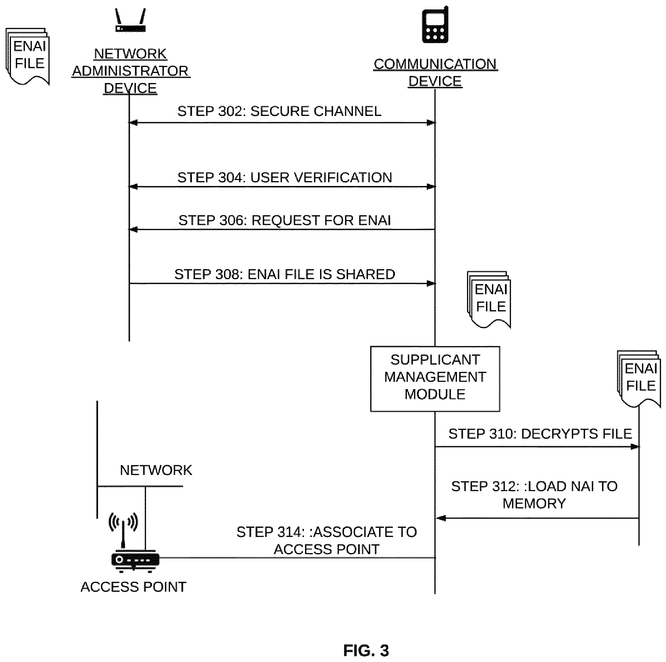

The retrieved network access information and the user authentication requirement criteria are stored in a memory present in the communication device. This is further explained in detail in conjunction with FIG. 3. The user authentication requirement criteria may correspond to security information associated with the user, such as, biometric information, user specified passwords, user gestures, Captcha, challenges, etc. The user authentication requirement criteria may be indicated in the ENAI file using an authentication flag residing in the ENAI file. The user authentication requirement criteria are further explained in detail in conjunction with FIG. 5b.

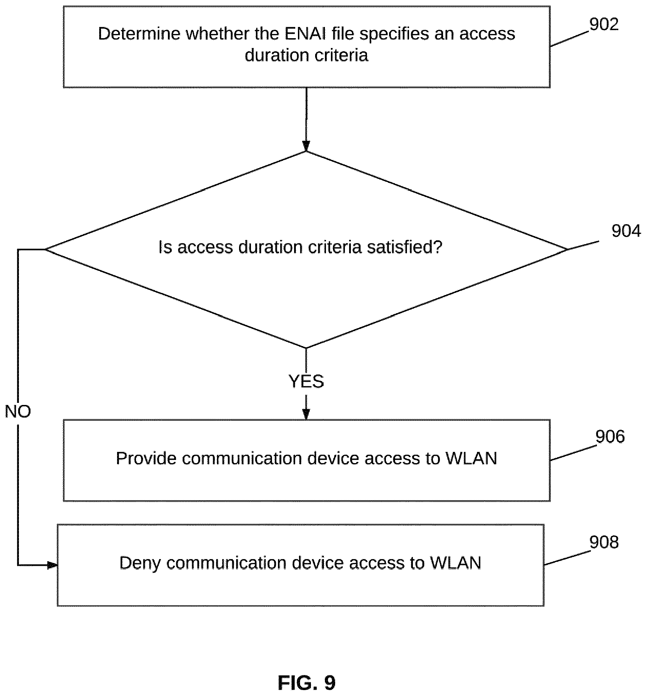

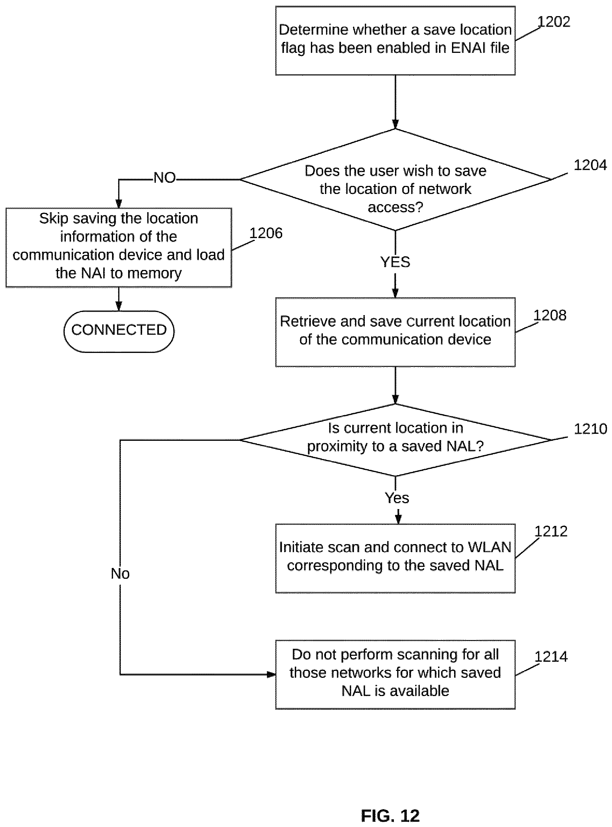

In an embodiment, in addition to the user authentication requirement criteria, additional criteria may also be specified and retrieved from the ENAI file. Examples of the additional criteria include, but are not limited to access duration criteria and location criteria. The access duration criteria are further explained in conjunction with FIG. 9. Further, the location criteria are further explained in conjunction with FIG. 12.

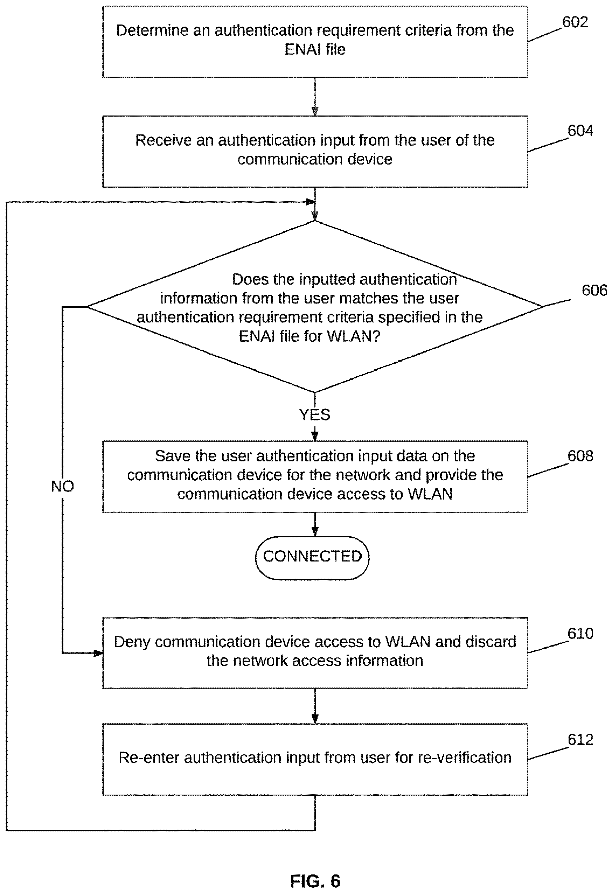

After retrieving the network access information and the user authentication requirement criteria, the user of the communication device is prompted to respond to the user authentication requirement that was retrieved from the ENAI file. Thus, at step 206, a user authentication input to satisfy the user authentication requirement criteria is received by the communication device. For example, if the user authentication requirement criteria correspond to fingerprint scanning, then the user of the communication device is prompted to scan his/her fingerprint at the communication device. Once the user enters his/her response to the user authentication requirement criteria, the response is saved and mapped to the network access information during the initial (first time) connection attempt and then, the network access information is loaded in the memory of the communication device. This is further explained in detail in conjunction with FIG 6.

If the response to user authentication requirement criteria is correct, and if the response is saved and mapped successfully to the network access information, then at step 208, the communication device accesses WLAN 100 using the network access information. The communication device performs authentication and association procedure with the access point as per IEEE 802.11 specification. The authentication is typically based on pre-shared key or 802.1X. Once the connection is established successfully for the communication device, the user accesses the internet or intranet in WLAN 100. In an embodiment, the communication device may transition between one or more functionalities. The one or more functionalities may be determined based on WLAN networks available, inputs provided by the user, capability associated with the communication device, and parameters specified by service provider of WLAN networks.

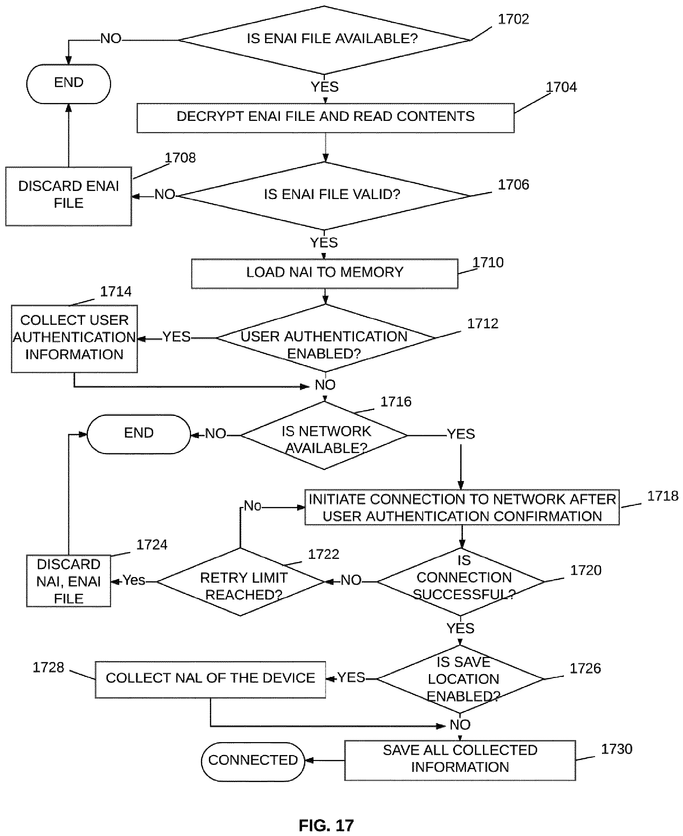

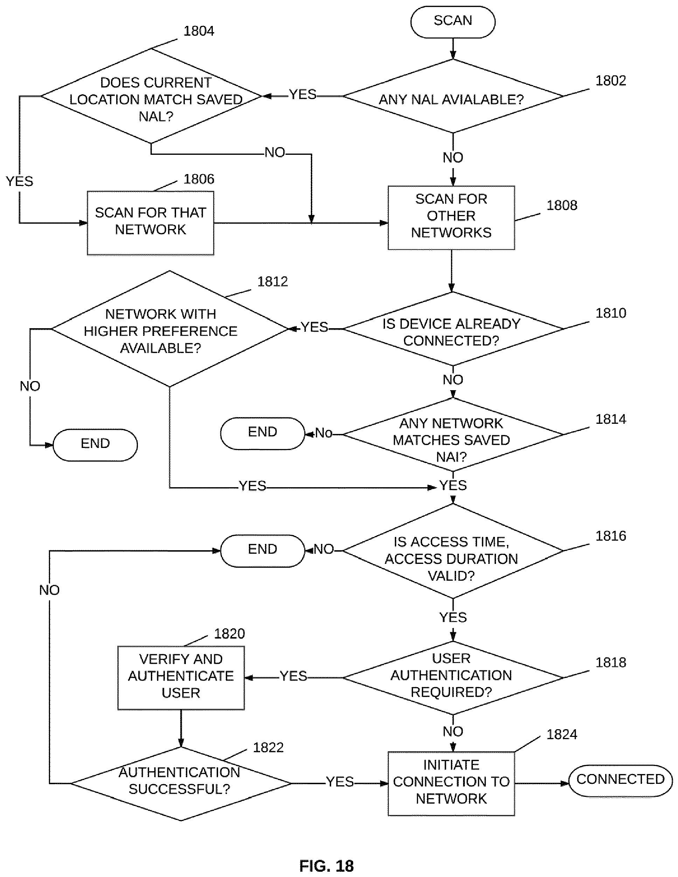

Examples of the one or more functionalities include, but are not limited to an "Add NAI" functionality, and a "Scan" functionality. It will be evident to a person skilled in the art that additional functionalities may be made available to the communication device. Further, it will also be evident to a person skilled in the art that the sequence of operations for the one or more functionalities may be customized or modified depending on the user and technology parameters associated with WLAN networks. The "Add NAI" functionality is further explained in detail in conjunction with FIG. 17 and the "Scan" functionality is further explained in detail in conjunction with FIG. 18.

FIG. 3 illustrates call flows for storing the network access information to memory of communication device and connecting to WLAN 100, in accordance with an embodiment. At step 302, a secure channel is established between network administrator device and communication device of the user. At step 304, the user verification is performed. At step 306, the communication device requests for ENAI file from the network administrator device. At step 308, the ENAI file is shared by the network administrator device. Thereafter, at step 310, the supplicant program in the communication device decrypts the ENAI file. At step 312, the network access information is stored in the memory of the communication device. Finally, at step 314, the communication device associates itself with access point associated with WLAN 100 using the loaded network access information present in memory of the communication device.

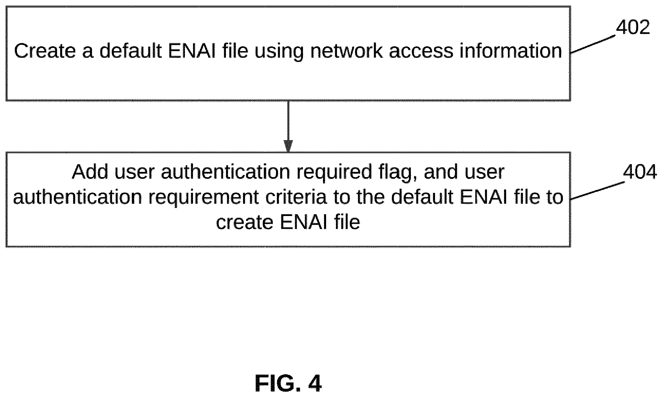

FIG. 4 illustrates a flowchart of a method for creating the ENAI file, in accordance with an embodiment. The ENAI file includes network access information that is used by communication device to access WLAN 100. At step 402, a default ENAI file is created using the network access information. The network access information includes information such as SSID, pre-shared keys, passwords etc. In order to create the default ENAI file, the network access information is encrypted using on or more encryption techniques. The contents of the default ENAI file are further explained in conjunction with FIG. 5a. After the default ENAI file is created, at step 404, user authentication required flag, and user authentication requirement criteria are added to the default ENAI file to create the ENAI file. This further secures the connection process to WLAN 100. The ENAI file created after adding the user authentication required flag and user authentication requirement criteria are further explained in conjunction with FIG. 5b.

The user authentication required flag indicates that an additional authentication step is required for communication device to access WLAN 100. Further, the user authentication requirement criteria specify the type of user authentication required at the communication device for establishing the connection and providing access to WLAN 100. The user authentication requirement criteria may correspond to one or more of a biometric based authentication, a password based authentication, a user gesture or swipe based authentication. Examples of the biometric based authentication include, but are not limited to facial recognition, fingerprint recognition, and iris recognition.

FIG. 5a is a block diagram showing contents of a default ENAI file, in accordance with an embodiment. As shown in FIG. 2, the default ENAI file includes information associated with network access information such as SSID, Security type, encryption type, and passphrase. Further, the default ENAI file may also include addition information such as network display name.

Fig. 5b is a block diagram showing contents of the ENAI file having user authentication required flag, and user authentication requirement criteria, in accordance with an embodiment. In addition to the contents of the default ENAI file which has already been explained in conjunction with FIG. 5a, the created ENAI file includes information such as user authentication required flag and user authentication requirement criteria. The user authentication flag can be set as "1" or "0". If the user authentication flag is set as 1, the connection process will include an authentication step, wherein the communication device will initiate an authentication step before accessing WLAN 100. Further, when the user authentication required flag is 1, then user authentication requirement criteria will provide mode of inputting the authentication by the user of the communication device. The user authentication requirement criteria may correspond to one or more of a biometric based authentication, a password based authentication, a user gesture or swipe based authentication. For example, as shown in FIG. 5b, the user authentication requirement criteria are inputted as fingerprint. Thus, the user of the communication device will have to scan his fingerprint as part of the authentication for accessing WLAN 100. In another embodiment, the user authentication requirement criteria can be enabled at the communication device by the user without the requirement to include a flag (for e.g. UserAuthReq as shown in FIG. 5b) in the ENAI file.

FIG. 6 illustrates a flowchart of a method for providing communication device access to WLAN 100 based on user authentication requirement criteria, in accordance with an embodiment. The user authentication requirement criteria specify the type of user authentication that is required by the user to provide as part of authentication challenge, when the user authentication flag is set as "1" in ENAI file. This has already been explained in conjunction with FIG. 5b. Thus, at step 602, authentication requirement criteria are determined from the ENAI file. Thereafter, at step 604, an authentication input is received from the user of the communication device. The authentication input may be entered by the user using a user authentication input device such as a camera, screen, keyboard, mouse etc. After the authentication input is received from the user, at step 606, it is determined whether the inputted authentication information from the user matches the user authentication requirement criteria specified in the ENAI file.

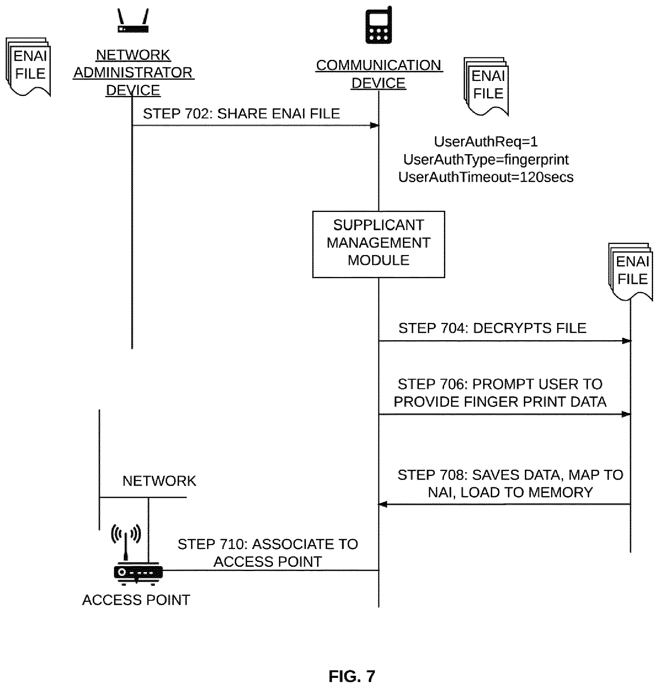

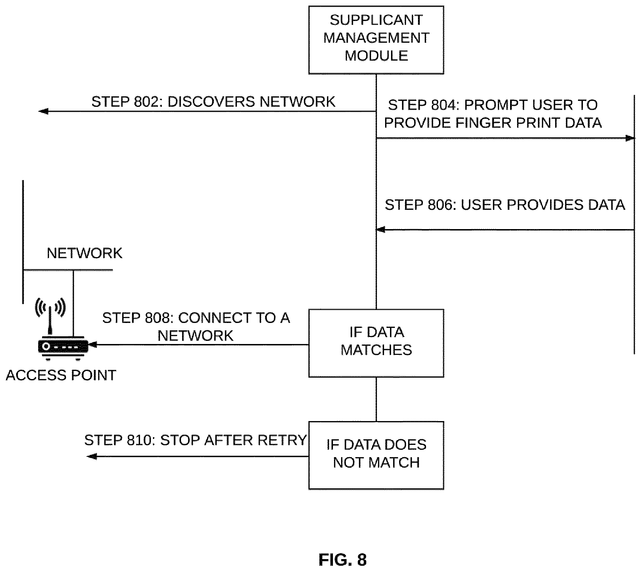

If the authentication input matches the user authentication requirement criteria present in ENAI file, then at step 608, the user authentication input data is saved on the communication device for that network and the communication device is provided access to WLAN 100. This is further explained in detail in conjunction with FIG. 7. Thereafter, the communication device, before connecting to that WLAN 100, shall prompt user to provide authentication input data every time. The authentication input data collected from user is compared against already saved data for that network. If the data matches, the communication device is granted access to WLAN 100. In the event that the user authentication input does not match the already saved data, then at step 610, the communication device is denied access to WLAN 100. At step 612, the user may be prompted again to re-enter the authentication input for re-verification. In response to user's entry, the process is again repeated to determine whether the re-entered authentication input matches the already saved data for that network. This is further explained in conjunction with FIG. 8.

FIG. 7 illustrates call flows for saving the response to user authentication requirement criteria, mapping the response to the network access information in the ENAI file and loading the network access information to the memory present in the communication device, in accordance with an embodiment. At step 702, the ENAI file is shared with the communication device of the user by the network administrator device. At step 704, the supplicant program in the communication device decrypts the ENAI file. At step 706, the user is prompted to provide response to user authentication requirement criteria (e.g. fingerprint). Thereafter, at step 708, the response is saved, mapped to network access information in the ENAI file, and loaded into the memory of the communication device. Finally, at step 710, the communication device associates to the access point associated with WLAN 100.

FIG. 8 illustrates call flows for stopping connection attempts after retrying for a specified number of times, in accordance with an embodiment. At step 802, the supplicant program in the communication device discovers a WLAN network. Thereafter, at step 804, the user is prompted to enter his response to user authentication requirement criteria (e.g. fingerprint). At step 806, the user provides his response. At step 808, the communication device connects to the WLAN network if the response provided by the user for user authentication requirement matches with data already saved for that network at step 708. Else, at step 810, the communication device stops trying to connect to WLAN network after retrying for a specific number of times when the response of the user does not match the data already saved for that network at step 708.

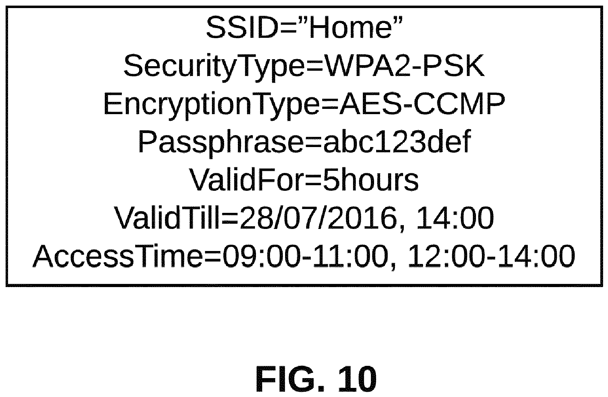

FIG. 9 illustrates a flowchart of a method for providing a communication device access to WLAN 100 based on access duration criteria, in accordance with an embodiment. In order to control or regulate the access to WLAN 100, the network administrator device can indicate the duration for which the access is granted per user, per device in the ENAI file. For example, the access duration can be specified for particular hours or minutes. In the same manner, the access duration can be specified as until a specific time, such as, a particular date or a particular day in a week. The network access duration or access time can be granted as unlimited, if needed for selected users. Thus, for controlling or regulating the access to WLAN 100, at step 902, the communication device determines whether the ENAI file specifies access duration criteria. The access duration may correspond to one or more of amount of time, date, day or time intervals. This is further explained in conjunction with FIG. 10.

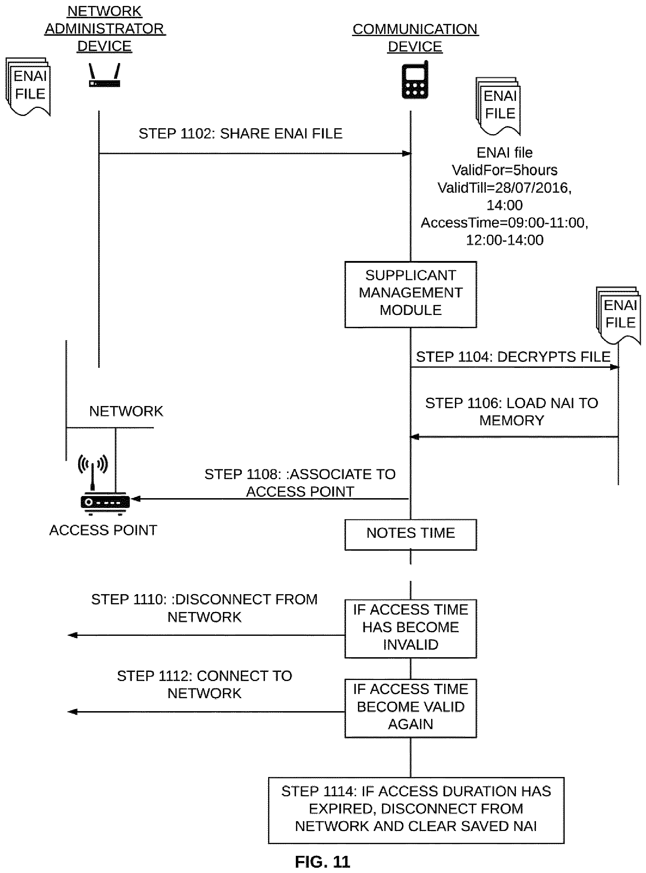

After determining that the ENAI file specifies access duration criteria, at step 904, it is checked whether the access duration criteria are satisfied. If the access duration criteria are satisfied, then at step 906, user is provided access to WLAN 100. In the event that the access duration criteria are not satisfied, then at step 908, the user is denied access to WLAN 100. This is further explained in detail in conjunction with FIG. 11.

FIG. 10 is a block diagram showing contents of ENAI file having access duration criteria, in accordance with an embodiment. The access to WLAN 100 may be controlled or regulated by using access duration criteria. This has already been explained in conjunction with FIG. 9. In order to enter details associated with the access duration criteria, the default ENAI file may be modified. The contents of the default ENAI file have already been explained in conjunction with FIG. 5a. In addition to the contents of the default ENAI file, an access duration criteria field may be added as shown in FIG. 10. The access duration criteria may correspond to amount of time ("ValidFor"), or specify a date limit ("ValidTill"), or a time interval ("AccessTime") as shown in FIG. 10. Thus, depending on the type of access duration criteria, the communication device may be granted access to WLAN 100 either for 5 hours, or until 1400 hrs on 28/07/2016, or between 0900-1100 hrs and 1200 to 1400 hrs as shown in FIG. 10. When the access duration criteria are not satisfied, then the access for communication device to WLAN 100 may be revoked.

FIG. 11 illustrates call flows for the initial or first time connection, disconnecting from WLAN 100 when the access criteria is not met, connecting back to the WLAN when the access criteria is met and disconnecting, removing the saved network access information when the access duration criteria has expired, in accordance with an embodiment. At step 1102, the ENAI file is shared with the communication device of the user by the network administrator device. Thereafter, at step 1104, the supplicant program in the communication device decrypts the ENAI file. At step 1106, the network access information is stored in to the memory of the communication device. At step 1108, the communication device associates itself with the access point and notes the time. At step 1110, the communication device disconnects from the network if the access time has become invalid. Thereafter, at step 1112, the communication device connects to the network if the access time becomes valid again. At step 1114, the communication device disconnects from the network and clears the saved network access information stored in the memory if the access duration has expired.

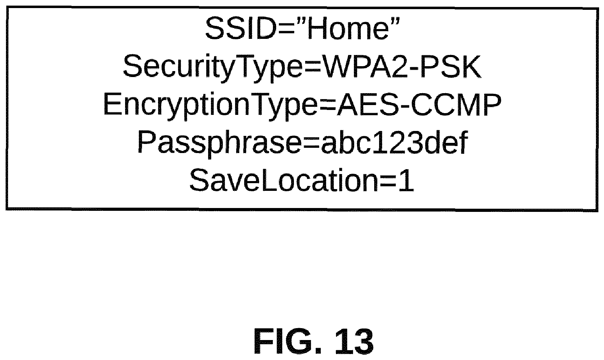

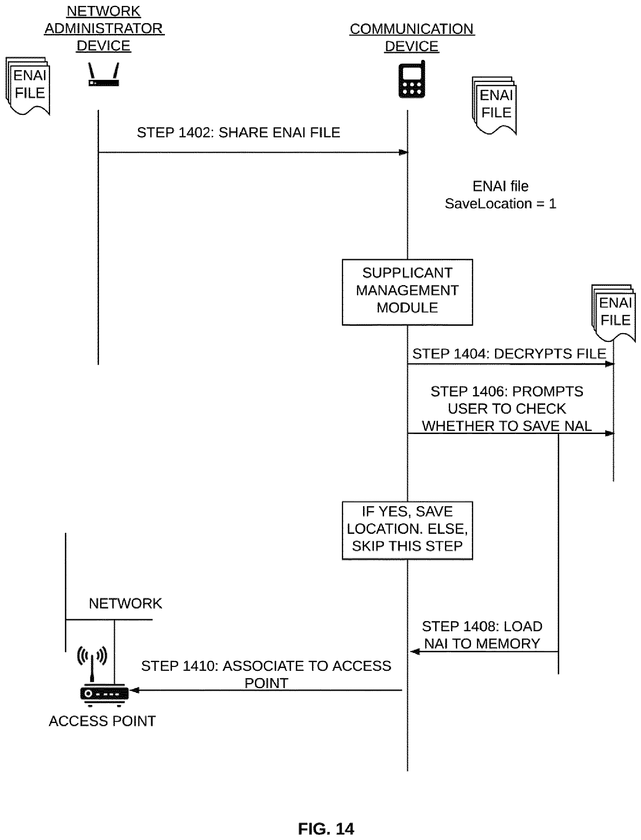

FIG. 12 illustrates a flowchart of a method for providing a communication device access to WLAN 100 based on location criteria, in accordance with an embodiment. In order to scan for appropriate WLAN networks at appropriate locations, location criteria may be specified in the default ENAI file. The location criteria are used for accessing appropriate WLAN networks in a seamless manner as well as to optimize the power consumption and operations of communication device. The location criteria may be specified in default ENAI file using a "save location" flag. This is further explained in detail in conjunction with FIG. 13. Thus, at step 1202, the communication device determines whether a save location flag has been enabled in ENAI file. If the save location flag has been enabled, then at step 1204, the user of the communication device is prompted whether the user wishes to save the location of network access. If the user wishes to save the location of the network access, then at step 1206, the current location of the communication device is retrieved and saved for that network. For example, for WLAN 100, the current location of the communication device is retrieved and saved as location data for WLAN 100. The current location of the communication device may be determined using one or more of a GPS technology, a triangulation technology, a GPRS technology, and a local location estimation technology. It will be evident to a person skilled in the art that the current location of the communication device may be determined using any other technology that is available in the market. In the event that the user does not wish to save the current location of network access, then at step 1208, the communication device skips saving the location information of the communication device and loads the NAI to memory. Thereafter, at step 1210, it is determined whether the current location of the communication device indicates proximity to a saved Network Access Location (NAL). If the current location indicates proximity, then at step 1212, communication device initiates scan and connects to the WLAN network. If the current location does not indicate proximity, then at step 1214, the communication device does not perform scanning. This is further explained in detail in conjunction with FIG. 14.

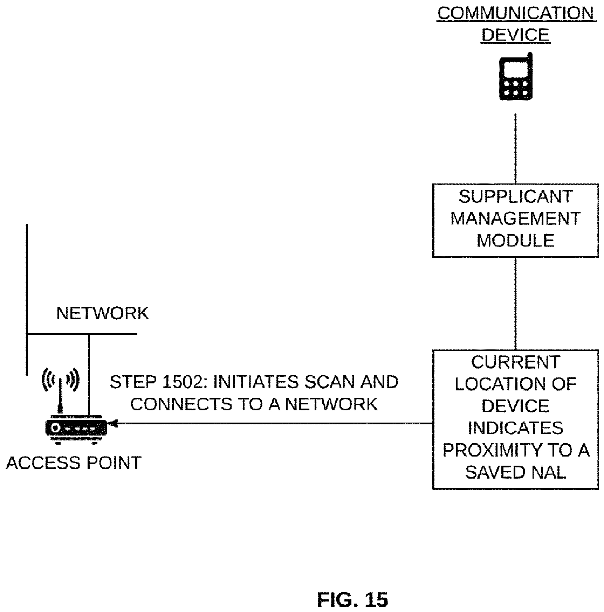

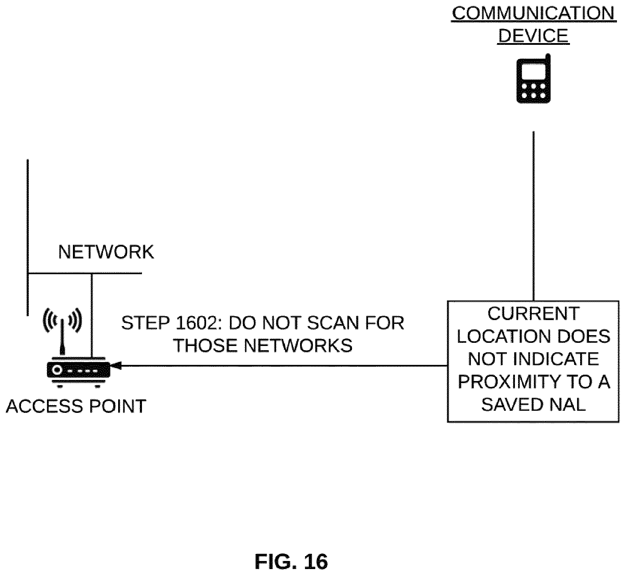

In an embodiment, if the communication device has one or more saved network access locations in its memory, then the communication device checks the current location of the communication device periodically. If the current location of the communication device indicates proximity to a saved Network Access Location (NAL), the communication device starts scanning for that particular network. If all requirements are met, then the communication device loads the network access information to memory and connects to the corresponding network. This is further explained in detail in conjunction with FIG. 15. If the current location does not indicate proximity to any saved NALs, then the communication device does not initiate scan for all those networks for which NAL is available as shown in Fig. 16.

FIG. 13 is a block diagram showing contents of an ENAI file having a save location flag, in accordance with an embodiment. In order to grant access to WLAN 100 based on location, location criteria may be specified in the default ENAI file. The default ENAI file has already been explained in conjunction with FIG. 5a. The location criteria may be specified as a "savelocation" flag as shown in FIG. 13. If the "savelocation" flag is enabled, then the user of the communication device is prompted whether he wishes to save the current location for WLAN 100. If the "savelocation" flag is not enabled, then the user of the communication device is not prompted to save the current location for WLAN 100. In an embodiment, the current location may be saved for network access directly by the user of the communication device without requiring location criteria to be specified in ENAI file.

FIG. 14 illustrates call flows for saving location data for a WLAN network, in accordance with an embodiment. At step 1402, the ENAI file is shared with the communication device by the network administrator device. Thereafter, at step 1404, the supplicant program in communication device decrypts the ENAI file. At step 1406, the user is prompted whether he/she wishes to save the network location information and the network location information is saved if the user responds yes to the prompt. At step 1408, the network access information is saved to the memory of the communication device. Finally, at step 1410, the communication device associates itself to the access point associated with the WLAN network.

FIG. 15 illustrates call flows for scanning for a particular WLAN network, in accordance with an embodiment. At step 1502, the supplicant program in the communication device initiates scan and connects to the WLAN network when the current location of communication device indicates proximity to a saved network access location.

FIG. 16 illustrates call flows to avoid scanning for WLAN network, in accordance with an embodiment. At step 1602, the supplicant program in the communication device does not perform scanning when current location of communication device does not indicate proximity to a saved network access location.

FIG. 17 illustrates a flowchart of a method for checking if any new ENAI file is available and adding the network access information to memory after verification, in accordance with an embodiment. At step 1702, it is determined whether ENAI file is available. If the ENAI file is available, then at step 1704, the ENAI file is decrypted and its content is read. At step 1706, the validity of the ENAI file is determined. If the ENAI file is not valid, then at step 1708, the ENAI file is discarded. If the ENAI file is valid, then at step 1710, the network access information present in the ENAI file is loaded in to the memory. At step 1712, it is determined whether user authentication is enabled. If the user authentication is enabled, then at step 1714, user authentication information is collected.

Thereafter, at step 1716, network availability is checked. If the network is available and user authentication is confirmed, then at step 1718, connection to network is initiated. As a result of connection initiation, at step 1720, it is determined whether the connection is successful. If the connection is not successful, then a reconnection is initiated. Consequently, at step 1722, it is determined whether the number of retry has reached a limit. If the number of retry has reached the limit, then at step 1724, the network access information as well as the ENAI file is discarded. In the event where the connection is successful, then at step 1726, it is determined whether the save location flag is enabled. If the save location flag is enabled, then at step 1728, network location (NAL) of the communication device is collected. Thereafter, at step 1730, all the collected information is saved in the memory.

FIG. 18 illustrates a flowchart of a method for scanning for saved networks, in accordance with an embodiment. At step 1802, it is determined whether any network location data is available. If network location data is available, then at step 1804, it is checked whether the current location of communication device matches with the saved network location. In the event where the current location matches the saved network location, at step 1806, the saved network is scanned. When the current location does not match the saved network location, then at step 1808, other networks are scanned.

Thereafter, at step 1810, it is determined whether the communication device is already connected. If the communication device is already connected, then at step 1812, it is determined whether a network with a higher preference is available. When the communication device is not connected, then at step 1814, any network that matches with the saved network is determined.

Thereafter, at step 1816, it is determined whether the access time and/or access duration is valid. If the access time and/or access duration is valid, then at step 1818, it is determined whether user authentication is required. In the event where authentication is required, at step 1820, the user is verified and authenticated. At step 1822, it is checked whether the authentication was successful. When the authentication is not required or when the authentication is successful, then at step 1824, the connection to the network is initiated in order to connect the communication device to the network.

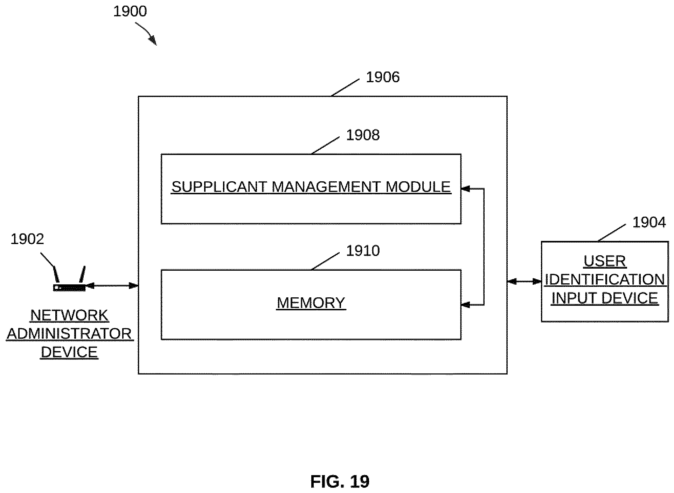

FIG. 19 illustrates a system 1900 for providing a communication device access to WLAN 100, in accordance with an embodiment. System 1900 includes a network administrator device 1902, a user identification input device 1904, and communication device 1906. Communication device 1906 further includes a supplicant management module 1908, and a memory 1910, wherein supplicant management module 1908 is operatively coupled with network administration device 1902 and user identification input device 1904.

Supplicant management module 1908 further includes additional modules (not shown in FIG. 19) such as, but not limited to an encryption/decryption module, a key management module, a location tracker module, a core functionality module, and a user authentication module. In an embodiment, the additional modules such as the encryption/decryption module, the key management module, the location tracker module, the core functionality module, and the user authentication module may be separate modules within communication device module 1906 and operatively coupled to supplicant management module 1908.

In order to provide communication device 1906 access to WLAN 100, an ENAI file is received by supplicant management module 1908 from network administration device 1902. Before transferring the ENAI file, network administrator device 1902 establishes a secure communication channel between communication device 1906 and itself. In an embodiment, network administrator device 1902 may correspond to the access point present in WLAN 100. Alternatively, in another embodiment, network administrator device 1902 may be any other device that has been configured to allow communication device 1906 to access WLAN 100.

In an embodiment, network administrator device 1902 obtains information about the user associated with communication device 1906 and details of communication device 1906 to verify and confirm whether the user and his/her communication device 1906 are authorized to access WLAN 100. Once network administrator device 1902 verifies and confirms that the user and his/her communication device 1906 is authorized, the NAI is shared with supplicant management module 1908 in an encrypted manner (i.e., ENAI file). A default ENAI file includes information associated with network access information such as SSID, Security type, encryption type, and passphrase. Further, the default ENAI file may also include addition information such as network display name. This has already been explained in conjunction with FIG. 5a.

Supplicant management module 1908 decrypts the ENAI file to retrieve the network access information and the user authentication requirement criteria. The network access information includes information such as SSID, login credentials such as password, and security keys. The retrieved network access information and the user authentication requirement criteria are stored in memory 1910 present in communication device 1906.

The user authentication requirement criteria may correspond to security information associated with the user such as biometric information, user specified passwords, user gestures, Captcha, challenges, etc. The user authentication requirement criteria may be indicated in the ENAI file using an authentication required flag residing in the ENAI file. The user authentication flag can be set as "1" or "0". If the user authentication flag is set as 1, the connection process will include an authentication step, wherein communication device 1906 will initiate an authentication step before accessing WLAN 100. Further, when the user authentication required flag is 1, then user authentication requirement criteria will provide mode of inputting the authentication by the user of communication device 1906 via user identification input device 1904. The user authentication requirement criteria may correspond to one or more of a biometric based authentication, a password based authentication, a user gesture or swipe based authentication. This has already been explained in conjunction with FIG. 5b.

After retrieving the network access information and the user authentication requirement criteria, supplicant management module 1908 prompts the user of communication device 1906 to respond to the user authentication requirement that was retrieved from the ENAI file. The user enters a response to satisfy the user authentication requirement criteria using user identification input device 1904. For example, if the user authentication requirement criteria correspond to fingerprint scanning, then the user of communication device 1906 is prompted to scan his/her fingerprint at user identification input device 1904. Depending on the user authentication requirement criteria, user identification input device 1904 may correspond to a camera, screen, keyboard, mouse etc

Once the user enters his/her response to the user authentication requirement criteria, supplicant management module 1908 saves the response and maps the data to the network access information. Further, supplicant management module also loads the network access information in memory 1910. Thus, If the response to user authentication requirement criteria is correct, and if the response is saved and mapped successfully to the network access information, then communication device 1906 is provided accesses to WLAN 100 using the network access information.

Thereafter, communication device 1906 shall prompt user to provide user authentication input every time before connecting to the saved network. If the user authentication input matches with already saved data for that network, the communication device is granted access to WLAN 100. In the event that the user authentication input does not match the already saved data for that network, then communication device 1906 is denied access to WLAN 100. The user may be prompted again to re-enter the authentication input for re-verification. In response to user's re-entry, the process is again repeated to determine whether the re-entered user authentication input matches with already saved data for that network. Supplicant management module 1908 stops trying to connect to WLAN 100 after retrying for a specific number of times when the user authentication input does not match the already saved data for that network.

In an embodiment, in addition to the user authentication requirement criteria, additional criteria may also be retrieved from the ENAI file. Examples of the additional criteria include, but are not limited to access duration criteria, and location criteria. The access duration criteria, and location criteria may be used to control or regulate the access to WLAN 100. For example, network administrator device 1902 can indicate the duration for which the access is granted per user, per communication device in the ENAI file. The access duration can be specified for particular hours or minutes. In the same manner, the access duration can be specified as until a specific time such as particular date or particular day in a week. The network access duration or access time can be granted as unlimited, if needed for selected users.

In order to enter details associated with the access duration criteria, the default ENAI file may be modified. The access duration criteria may correspond to amount of time ("ValidFor"), or specify a date limit ("ValidTill"), or a time interval ("AccessTime") as has already been explained in conjunction with FIG. 10. Supplicant management module 1908 is configured to check whether the access duration criteria is satisfied. If the access duration criteria are satisfied, the user of communication device 1906 is provided access to WLAN 100. In the event that the access duration criteria are not satisfied, then the user is denied access to WLAN 100.

In an embodiment, communication device 1906 may be provided access to WLAN 100 based on location criteria. In order to scan for appropriate WLAN networks at appropriate locations, location criteria may be specified in the default ENAI file. The location criteria are used for accessing appropriate WLAN networks in a seamless manner as well as to optimize the power consumption and operations of communication device. The location criteria may be specified in default ENAI file using a "save location" flag. For example, the location criteria may be specified as a "savelocation" flag as has already been explained in conjunction with FIG. 13. If the "savelocation" flag is enabled, then the user of communication device 1906 is prompted whether he/she wishes to save the current location for WLAN 100. If the "savelocation" flag is not enabled, then the user of communication device 1906 is not prompted to save the current location for WLAN 100.

If the user wishes to save the location of the network access, then the current location of communication device 1906 is retrieved by supplicant management module 1908 and information associated with the location is saved for that network. For example, for WLAN 100, the current location of communication device 1906 is retrieved and saved as location data for WLAN 100. The current location of communication device 1906 may be determined using one or more of a GPS technology, a triangulation technology, a GPRS technology, and a local location estimation technology. In the event that the user does not wish to save the current location of network access, then communication device 1906 skips saving the location information of communication device 1906 and loads the network access information to memory 1910 of the communication device. Thereafter, communication device 1906 is provided access to WLAN 100.

Further, if communication device 1906 has one or more saved network access locations in memory 1910, then supplicant management module 1908 checks the current location of communication device 1906 periodically. If the current location of communication device 1906 indicates proximity to a saved Network location (NAL), communication device 1906 starts scanning for that particular network. If all requirements are met, then communication device 1906 loads the network access information to memory 1910 and connects to the corresponding network. This has already been explained in conjunction with FIG. 15. If the current location does not indicate proximity to any saved NALs, then communication device 1906 does not initiate scan for all those networks for which NAL is available. This has already been explained in conjunction with FIG. 16.

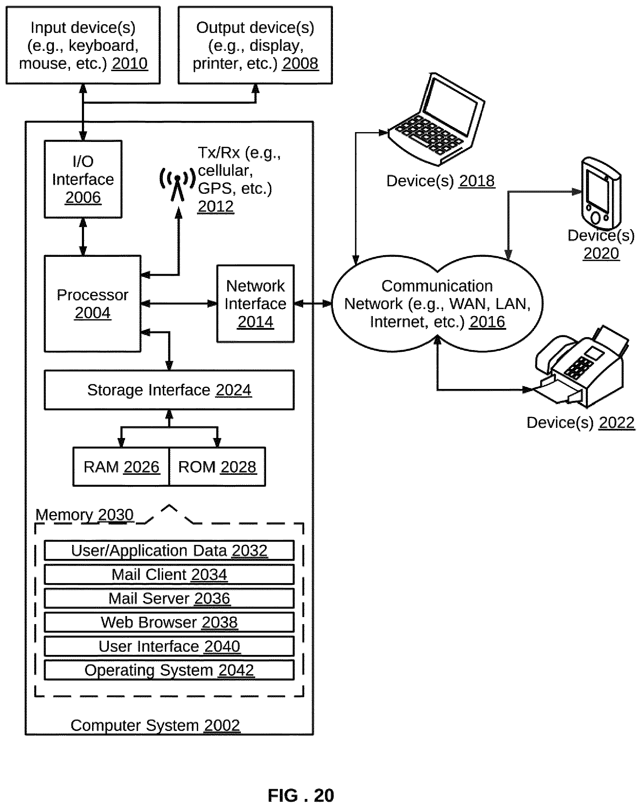

FIG. 20 illustrates a block diagram of an exemplary computer system 2002 for implementing various embodiments is disclosed. Computer system 2002 may comprise a central processing unit ("CPU" or "processor") 2004. Processor 2004 may comprise at least one data processor for executing program components for executing user- or system-generated requests. A user may include a person, a person using a device such as such as those included in this disclosure, or such a device itself. Processor 2004 may include specialized processing units such as integrated system (bus) controllers, memory management control units, floating point units, graphics processing units, digital signal processing units, etc. Processor 2004 may include a microprocessor, such as AMD Athlon, Duron or Opteron, ARM's application, embedded or secure processors, IBM PowerPC, Intel's Core, Itanium, Xeon, Celeron or other line of processors, etc. Processor 2004 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 2004 may be disposed in communication with one or more input/output (I/O) devices via an I/O interface 2006. I/O interface 2006 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using I/O interface 2006, computer system 2002 may communicate with one or more I/O devices. For example, an input device 2008 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. An output device 2010 may be a printer, fax machine, video display (e.g., cathode ray tube (CRT), liquid crystal display (LCD), light-emitting diode (LED), plasma, or the like), audio speaker, etc. In some embodiments, a transceiver 2012 may be disposed in connection with processor 2004. Transceiver 2012 may facilitate various types of wireless transmission or reception. For example, transceiver 2012 may include an antenna operatively connected to a transceiver chip (e.g., Texas Instruments WiLink WL1283, Broadcom BCM4760IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, processor 804 may be disposed in communication with a communication network 2014 via a network interface 2016. Network interface 2016 may communicate with communication network 2014. Network interface 2016 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. Communication network 2014 may include, without limitation, a direct interconnection, local area network (LAN), wide area network (WAN), wireless network (e.g., using Wireless Application Protocol), the Internet, etc. Using network interface 2016 and communication network 2014, computer system 2002 may communicate with devices 2018, 2020, and 2022. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 602 may itself embody one or more of these devices.

In some embodiments, processor 2004 may be disposed in communication with one or more memory devices (e.g., a RAM 2026, a ROM 2028, etc.) via a storage interface 2024. Storage interface 2024 may connect to memory devices 2030 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

Memory devices 2030 may store a collection of program or database components, including, without limitation, an operating system 2032, a user interface application 2034, a web browser 2036, a mail server 2038, a mail client 2040, a user/application data 2042 (e.g., any data variables or data records discussed in this disclosure), etc. Operating system 2032 may facilitate resource management and operation of computer system 2002. Examples of operating system 2032 include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 2034 may facilitate display, execution, interaction, manipulation, or operation of program components through textual or graphical facilities. For example, user interfaces may provide computer interaction interface elements on a display system operatively connected to computer system 2002, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, computer system 2002 may implement web browser 2036 stored program component. Web browser 2036 may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, computer system 2002 may implement mail server 2038 stored program component. Mail server 2038 may be an Internet mail server such as Microsoft Exchange, or the like. Mail server 2038 may utilize facilities such as ASP, ActiveX, ANSI C++/C#, Microsoft .NET, CGI scripts, Java, JavaScript, PERL, PHP, Python, WebObjects, etc. Mail server 2038 may utilize communication protocols such as internet message access protocol (IMAP), messaging application programming interface (MAPI), Microsoft Exchange, post office protocol (POP), simple mail transfer protocol (SMTP), or the like. In some embodiments, computer system 2002 may implement mail client 2040 stored program component. Mail client 2040 may be a mail viewing application, such as Apple Mail, Microsoft Entourage, Microsoft Outlook, Mozilla Thunderbird, etc.

In some embodiments, computer system 2002 may store user/application data 2042, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Various embodiments of the invention provide methods, system, and computer program products for providing a communication device access to WLAN. The method allows sharing of network access information in a unique and secure manner. The secure manner of sharing network access information ensures that the network access information is passed on to the user's communication device without disclosing it to user by creating and sharing an Encrypted NAI file with the communication device. The method facilitates advanced user authentication and identification mechanism which helps in verifying the user of the communication device every time before connecting the communication device to WLAN. Further, the method also allows a network administrator to grant network access time, specify access duration on per user, per device basis to the communication device. As a result, the network administrator is able to manage the wireless local area network more efficiently, especially in large scale deployments. The method also provides an efficient location based wireless local area network scanning methodology which helps prevent disclosure of user's private information.

The specification has described systems and methods for providing a communication device access to WLAN. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method of providing a communication device access to a wireless local area network (100), the method comprising:
receiving (202), by the communication device (1906), an Encrypted Network Access Information ENAI file from a network administration device (1902) wherein the ENAI file comprises network access information for the wireless local area network (100) and user authentication requirement criteria;
decrypting (204), by the communication device (1906), the ENAI file to retrieve the network access information and the user authentication requirement criteria;
receiving (206) by the communication device (1906), a user authentication input to satisfy the user authentication requirement criteria; and
accessing (208) by the communication device (1906), the wireless local area network (100) using the network access information, when the user authentication input satisfies the user authentication requirement criteria.

2. The method of claim 1, further comprising creating the ENAI file to include the network access information, a user authentication required flag, and the user authentication requirement criteria.

3. The method of claim 1 or claim 2, further comprising denying the communication device (1906) access to the wireless local area network (100), when the user authentication input fails to satisfy the user authentication requirement criteria.

4. The method of any of the preceding claims, wherein the user authentication requirement criteria specify a mode of the user authentication input, the mode comprising at least one of a fingerprint scan, iris scan, facial recognition, numeric password, gesture, or swipe.

5. The method of any of the preceding claims, wherein the ENAI file further comprises access duration criteria associated with a user of the communication device (1906).

6. The method of claim 5, wherein the access duration criteria specify providing the user access to the wireless local area network (100) during existence of at least one-time period.

7. The method of claim 5 or claim 6, further comprising granting the communication device (1906) access to the wireless local area network (100) when the access duration criteria are satisfied.

8. The method of any of claims 5 to 7, further comprising denying the communication device (1906) access to the wireless local area network (100), when the access duration criteria are not satisfied.

9. The method of any of the preceding claims, wherein the ENAI file further comprises a save location flag associated with location of the wireless local area network (100).

10. The method of claim 9, further comprising saving, by the communication device (1906), a current location of the communication device (1906) as a network access location in response to detecting the save location flag in the ENAI.

11. The method of claim 10, wherein the current location of the communication device (1906) is saved as the network access location, when the communication device (1906) is granted access to the wireless local area network (100) first time after receiving the ENAI.

12. The method of claim 10 or claim 11, further comprising initiating a scan for the wireless local area network (100), when the communicating device (1906) is within a predefined distance from a saved network access location.

13. The method of any of claims 10 to 12, further comprising eliminating a scan for the wireless local area network (100), when the communication device (1906) is not within a predefined distance from a saved network access location.

14. A system (1900) for providing a communication device (1906) access to a wireless local area network (100), the system comprising:
a network administration device (1902);
a user identification input device (1904); and the communication device (1906) wherein the communication device (1906) is configured to perform the method of any of claims 1 to 13.

15. A processor-readable medium comprising instructions which, when executed by one or more processors, cause the one or more processors to perform the method of any of claims 1 to 13.

## Patentansprüche

1. Verfahren zum Bereitstellen einer Kommunikationsvorrichtung für den Zugang zu einem Wireless Local Area Network (100), wobei das Verfahren folgendes umfasst:
Empfangen (202) durch die Kommunikationsvorrichtung (1906) einer Encrypted Network Access Information (ENAI)-Datei von einer Netzverwaltungsvorrichtung (1902),
wobei die ENAI-Datei Netzzugangsinformationen für das Wireless Local Area Network (100) und Benutzerauthentifizierungsanforderungskriterien umfasst;
Entschlüsseln (204) der ENAI-Datei durch die Kommunikationsvorrichtung (1906), um die Netzzugangsinformationen und die Benutzerauthentifizierungsanforderungskriterien abzurufen;
Empfangen (206) einer Benutzerauthentifizierungseingabe durch die Kommunikationsvorrichtung (1906), um die Benutzerauthentifizierungsanforderungskriterien zu erfüllen; und
Zugang (208) durch die Kommunikationsvorrichtung (1906) auf das Wireless Local Area Network (100) unter Verwendung der Netzzugangsinformationen, wenn die Benutzerauthentifizierungseingabe die Benutzerauthentifizierungsanforderungskriterien erfüllt.

2. Verfahren nach Anspruch 1, ferner umfassend das Erstellen der ENAI-Datei, so dass diese die Netzzugangsinformationen aufweist, eine Flag für eine erforderliche Benutzerauthentifizierung und die Benutzerauthentifizierungsanforderungskriterien.

3. Verfahren nach Anspruch 1 oder 2, ferner umfassend das Ablehnen des Zugangs der Kommunikationsvorrichtung (1906) zu dem das Wireless Local Area Network (100), wenn die Benutzerauthentifizierungseingabe die Benutzerauthentifizierungsanforderungskriterien nicht erfüllt.

4. Verfahren nach einem der vorstehenden Ansprüche, wobei die Benutzerauthentifizierungsanforderungskriterien einen Modus der Benutzerauthentifizierungseingabe spezifizieren, wobei der Modus mindestens eines der folgenden umfasst: einen Fingerabdrucksscan, einen Irisscan, eine Gesichtserkennung, ein numerisches Kennwort, eine Geste, oder eine Wischgeste.

5. Verfahren nach einem der vorstehenden Ansprüche, wobei die ENAI-Datei ferner Zugangsdauerkriterien umfasst, die einem Benutzer der Kommunikationsvorrichtung (1906) zugeordnet sind.

6. Verfahren nach Anspruch 5, wobei die Zugangsdauerkriterien das Bereitstellen des Benutzerzugangs zu dem Wireless Local Area Network (100) während dem Bestehen mindestens eines Zeitraums spezifizieren.

7. Verfahren nach Anspruch 5 oder 6, ferner umfassend das Gewähren des Zugangs durch die Kommunikationsvorrichtung (1906) zu dem Wireless Local Area Network (100), wenn die Zugangsdauerkriterien erfüllt sind.

8. Verfahren nach einem der Ansprüche 5 bis 7, ferner umfassend das Ablehnen des Zugangs durch die Kommunikationsvorrichtung (1906) zu dem Wireless Local Area Network (100), wenn die Zugangsdauerkriterien nicht erfüllt sind.

9. Verfahren nach einem der vorstehenden Ansprüche, wobei die ENAI-Datei ferner eine Flag zum Speichern eines Standorts umfasst, die dem Standort des Wireless Local Area Network (100) zugeordnet ist.

10. Verfahren nach Anspruch 9, ferner umfassend das Speichern eines aktuellen Standorts der Kommunikationsvorrichtung (1906) durch die Kommunikationsvorrichtung (1906) als einen Netzzugangsstandort als Reaktion auf das Erkennen der Flag zum Speichern eines Standorts in der ENAI-Datei.

11. Verfahren nach Anspruch 10, wobei der aktuelle Standort der Kommunikationsvorrichtung (1906) als der Netzzugangsstandort gespeichert wird, wenn der Kommunikationsvorrichtung (1906) Zugang zu dem Wireless Local Area Network (100) zum ersten Mal nach dem Empfang der ENAI-Datei gewährt wird.

12. Verfahren nach Anspruch 10 oder 11, ferner umfassend das Einleiten eines Scans für das Wireless Local Area Network (100), wenn sich die Kommunikationsvorrichtung (1906) innerhalb einer vorab definierten Entfernung von einem gespeicherten Netzzugangsstandort befindet.

13. Verfahren nach einem der Ansprüche 10 bis 12, ferner umfassend das Eliminieren eines Scans für das Wireless Local Area Network (100), wenn sich die Kommunikationsvorrichtung (1906) nicht innerhalb einer vorab definierten Entfernung von einem gespeicherten Netzzugangsstandort befindet.

14. System (1900) zum Bereitstellen eines Zugangs einer Kommunikationsvorrichtung (1906) zu einem Wireless Local Area Network (100), wobei das System folgendes umfasst:
eine Netzverwaltungsvorrichtung (1902);
eine Benutzeridentifikationseingabevorrichtung (1904); und die Kommunikationsvorrichtung (1906),
wobei die Kommunikationsvorrichtung (1906) so gestaltet ist, dass sie das Verfahren nach einem der Ansprüche 1 bis 13 ausführt.

15. Prozessorlesbares Medium, das Anweisungen umfasst, die, wenn sie durch einen oder mehrere Prozessoren ausgeführt werden, bewirken, dass der eine oder die mehreren Prozessoren das Verfahren nach einem der Ansprüche 1 bis 13 ausführen.

## Revendications

1. Procédé pour fournir un accès de dispositif de communication à un réseau local sans fil (100), le procédé comprenant les étapes consistant à :
recevoir (202), par le dispositif de communication (1906), un fichier d'informations d'accès au réseau cryptées (ENAI) provenant d'un dispositif d'administration de réseau (1902), le fichier ENAI comprenant des informations d'accès au réseau pour le réseau local sans fil (100) et des critères d'authentification d'utilisateur ;
décrypter (204), par le dispositif de communication (1906), le fichier ENAI pour récupérer les informations d'accès au réseau et les critères d'authentification d'utilisateur ;
recevoir (206), par le dispositif de communication (1906), une entrée d'authentification d'utilisateur pour satisfaire aux critères d'exigence d'authentification d'utilisateur ; et
accéder (208), par le dispositif de communication (1906), au réseau local sans fil (100) à l'aide des informations d'accès au réseau, lorsque l'entrée d'authentification d'utilisateur satisfait aux critères d'exigence d'authentification d'utilisateur.

2. Procédé selon la revendication 1, comprenant en outre l'étape consistant à créer le fichier ENAI pour inclure les informations d'accès au réseau, un indicateur requis d'authentification d'utilisateur et les critères requis d'authentification d'utilisateur.

3. Procédé selon la revendication 1 ou 2, comprenant en outre l'étape consistant à refuser au dispositif de communication (1906) l'accès au réseau local sans fil (100), lorsque l'entrée d'authentification d'utilisateur ne satisfait pas aux critères d'exigence d'authentification d'utilisateur.

4. Procédé selon l'une quelconque des revendications précédentes, les critères d'exigence d'authentification d'utilisateur spécifiant un mode de l'entrée d'authentification d'utilisateur, le mode comprenant un balayage d'empreinte digitale, un balayage d'iris, une reconnaissance faciale, un mot de passe numérique, un geste et/ou un glissement.

5. Procédé selon l'une quelconque des revendications précédentes, le fichier ENAI comprenant en outre des critères de durée d'accès associés à un utilisateur du dispositif de communication (1906).

6. Procédé selon la revendication 5, les critères de durée d'accès spécifiant la fourniture à l'utilisateur d'un accès au réseau local sans fil (100) pendant une période au moins unique.

7. Procédé selon la revendication 5 ou 6, comprenant en outre l'étape consistant à accorder au dispositif de communication (1906) un accès au réseau local sans fil (100) lorsque les critères de durée d'accès sont satisfaits.

8. Procédé selon l'une quelconque des revendications 5 à 7, comprenant en outre l'étape consistant à refuser au dispositif de communication (1906) l'accès au réseau local sans fil (100), lorsque les critères de durée d'accès ne sont pas satisfaits.

9. Procédé selon l'une quelconque des revendications précédentes, le fichier ENAI comprenant en outre un indicateur de localisation de sauvegarde associé à la localisation du réseau local sans fil (100).

10. Procédé selon la revendication 9, comprenant en outre l'étape consistant à sauvegarder, par le dispositif de communication (1906), d'un emplacement actuel du dispositif de communication (1906) en tant qu'emplacement d'accès au réseau en réponse à la détection de l'indicateur de localisation de sauvegarde dans l'ENAI.

11. Procédé selon la revendication 10, l'emplacement actuel du dispositif de communication (1906) étant sauvegardé comme emplacement d'accès au réseau, lorsque le dispositif de communication (1906) se voit accorder l'accès au réseau local sans fil (100) une première fois après réception de l'ENAI.

12. Procédé selon la revendication 10 ou 11, comprenant en outre l'étape consistant à lancer un balayage pour le réseau local sans fil (100), lorsque le dispositif de communication (1906) est à une distance prédéfinie d'un emplacement d'accès au réseau sauvegardé.

13. Procédé selon l'une quelconque des revendications 10 à 12, comprenant en outre l'étape consistant à éliminer un balayage pour le réseau local sans fil (100), lorsque le dispositif de communication (1906) n'est pas à une distance prédéfinie d'un emplacement d'accès réseau enregistré.

14. Système (1900) pour fournir un accès à un dispositif de communication (1906) à un réseau local sans fil (100), le système comprenant :
un dispositif d'administration réseau (1902) ;
un dispositif d'entrée d'identification d'utilisateur (1904) ; et
le dispositif de communication (1906)
le dispositif de communication (1906) étant conçu pour exécuter le procédé selon l'une quelconque des revendications 1 à 13.

15. Support lisible par processeur comprenant des instructions qui, lorsqu'elles sont exécutées par au moins un processeur, amènent l'au moins un processeur à exécuter toutes les étapes du procédé selon l'une quelconque des revendications 1 à 13.
